(19) Europäisches Patentamt
European Patent Office
Office européen des brevets

(11) **EP 2 537 011 B1**

(12) **EUROPÄISCHE PATENTSCHRIFT**

(45) Veröffentlichungstag und Bekanntmachung des Hinweises auf die Patenterteilung:
**12.04.2017 Patentblatt 2017/15**

(21) Anmeldenummer: **11719449.8**

(22) Anmeldetag: **15.02.2011**

(51) Int Cl.:
*G01J 3/443* (2006.01)    *G01N 21/67* (2006.01)
*G01J 3/02* (2006.01)    *G01J 3/18* (2006.01)
*G01J 3/20* (2006.01)

(86) Internationale Anmeldenummer:
**PCT/DE2011/075024**

(87) Internationale Veröffentlichungsnummer:
**WO 2011/100967 (25.08.2011 Gazette 2011/34)**

(54) **TEMPERATURKOMPENSIERTES SPEKTROMETER**

TEMPERATURE-COMPENSATED SPECTROMETER

SPECTROMÈTRE COMPENSÉ EN TEMPÉRATURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.02.2010 DE 102010000490**

(43) Veröffentlichungstag der Anmeldung:
**26.12.2012 Patentblatt 2012/52**

(73) Patentinhaber: **Bruker Elemental GmbH**
**47546 Kalkar (DE)**

(72) Erfinder:
• **SIMONS, Rainer**
**47559 Kranenburg (DE)**
• **SCHMIDT, Armin**
**47574 Goch (DE)**

(74) Vertreter: **CBDL Patentanwälte**
**Königstraße 57**
**47051 Duisburg (DE)**

(56) Entgegenhaltungen:
**US-A- 3 503 685    US-A1- 2004 239 931**

**Beschreibung**

TECHNISCHES GEBIET DER ERFINDUNG

Die Erfindung betrifft ein temperaturkompensiertes Spektrometer mit einem hohlen Optikgrundkörper mit wenigstens einem Lichtkanal, einer Lichtquelle, einer Lichteintrittsöffnung, einem Beugungsgitter und einer Detektoreinheit, die so angeordnet sind, daß die Fokalkurve des Spektrometers die Schnittweitengleichung erfüllt.

HINTERGRUND DER ERFINDUNG

Spektrometer zur spektralen Zerlegung und Ausmessung von Licht aus Emissionsvorgängen, die durch Verdampfung und Anregung von Materialien in heißen Plasmen (Bogenentladung in Luftatmosphäre, Funkenentladung unter Argon, ICP, Laser usw.) erzeugt werden, sind in unterschiedlichsten Ausgestaltungen bekannt.

Generell umfassen Spektrometer eine Lichteintrittsöffnung, die punkt- oder linienförmig ist und als Einzel- oder Mehrfachöffnung ausgeführt sein kann. Das zu zerlegende Licht gelangt entweder durch einen Lichtleiter oder ein Lichtleiterbündel vom Ort der Plasmaerzeugung zur dann potentiell weit entfernt liegenden Lichteintrittsöffnung (10 m und mehr sind für Wellenlängen ab circa 230 nm möglich) oder geht durch einen nach außen abgeschlossenen, ggf. argon- oder stickstoffgasgespülten oder evakuierten Lichtkanal direkt vom Ort der Plasmaerzeugung zur Lichteintrittsöffnung. Im letzteren Fall muß sich das optische System sehr nahe (höchstens wenige Dezimeter entfernt) zum Ort der Plasmaerzeugung befinden und relativ dazu ausgerichtet sein.

Die Orientierung und Ausdehnung einer nicht-punktförmigen Lichteintrittsöffnung spielt eine Rolle bei der Dimensionierung und Positionierung abbildender Elemente und Blenden im Lichtkanal zwischen Lichtquelle und Lichteintrittsöffnung, da sichergestellt werden muß, daß die analytisch relevanten Plasmabereiche komplett vom optischen System aufgenommen werden können.

Von der Lichteintrittsöffnung aus gelangt das zu zerlegende Licht auf ein oder mehrere simultan oder nacheinander arbeitende abbildende sowie dispersive Elemente. Die dispersiven Elemente können Prismen oder mechanisch oder holographisch hergestellte Beugungsgitter sein. Als abbildende Elemente werden sphärische oder asphärische Spiegel verwendet.

Bei der Verwendung von verspiegelten, sphärischen und konkaven Beugungsgittern vereinfacht sich der Aufbau des optischen Systems, da in solchen Systemen Dispersion und Abbildung durch ein und dasselbe optische Element erfolgt.

Abhängig von Gestalt und Dichte der auf der sphärischen Fläche des Beugungsgitters aufgebrachten beugenden Struktur (Form und Abstand der Gitterfurchen), dem Krümmungsradius der sphärischen Fläche des Beugungsgitters und der Entfernung der Lichteintrittsöffnung vom Symmetriezentrum der Gitterfurchen auf der Gitterfläche (Gittermittelpunkt), der sog. Eintrittsschnittweite, findet man beim Aufbau des optischen Systems die für ein zu analysierendes Material charakteristischen Spektrallinien bestimmter, wohlbekannter Wellenlängen unter bestimmten, mit Hilfe der so genannten Gittergleichung berechenbaren Beugungswinkeln und bei bestimmten beugungswinkelabhängigen Abständen vom Gittermittelpunkt (Austrittsschnittweiten).

Die Gittergleichung:

$$n\,G\,\lambda = \sin\alpha + \sin\beta \qquad (1)$$

beschreibt, welche Wellenlänge $\lambda$ in welcher Beugungsordnung $n$ bei gegebener Furchendichte oder Gitterkonstante $G$ (angegeben in Linien pro mm) bei welchem Beugungswinkel $\beta$ auftaucht, wenn der Einfallswinkel $\alpha$ des zu zerlegenden Lichts bekannt ist. Die Winkel werden dabei an der sog. Gitternormalen angetragen. Diese ist die Verbindungslinie zwischen Gittermittelpunkt und Krümmungsmittelpunkt der Gitterfläche.

Die Kurve, die die winkel- und abstandsmäßige Lage von Spektrallinien gegebener Wellenlängen relativ zum Gittermittelpunkt beschreibt, heißt Fokalkurve. Bekanntester Sonderfall einer Fokalkurve ist der Rowlandkreis in der sog. Paschen-Runge-Aufstellung eines Konkavgitters. Dabei befinden sich Gittermittelpunkt, Lichteintrittsöffnung und Detektoreinheit tangential an einem Kreis angeordnet, dessen Durchmesser dem Krümmungsradius des Konkavgitters entspricht und dessen Ebene als Dispersionsebene bezeichnet wird.

Im Gegensatz zur Paschen-Runge-Aufstellung verläuft die Fokalkurve eines Flat-Field-Gitters flacher bzw. manchmal auch s-förmig.

Die allgemeingültige Formel für den Verlauf der Fokalkurve von Rowlandkreis- und Flat-Field-Gittern in Dispersionsebene ist die Schnittweitengleichung:

$$\frac{\cos^2 \alpha}{L_A} - \frac{\cos \alpha}{R} + \frac{\cos^2 \beta}{L_B} - \frac{\cos \beta}{R} - n\lambda K = 0 \qquad (2)$$

wobei:

$\alpha$      Einfallswinkel;

$\beta$      Beugungswinkel;

$L_A$      Eintrittsschnittweite;

$L_B$      Austrittsschnittweite;

$R$      Gitterradius (Krümmungsradius der sphärischen Gitterfläche);

$n$      Beugungsordnung (ganzzahlig, positiv oder negativ);

$\lambda$      Wellenlänge (beim Beugungswinkel $\beta$);

$K$      spezifische Gitterkonstante, furchenformabhängig.

Aus der Schnittweitengleichung (2) folgt für $K = 0$ (Rowlandkreisgitter), daß alle Austrittsschnittweiten auf einem Kreis liegen müssen, wenn die Eintrittsschnittweite und der Gittermittelpunkt auf demselben Kreis liegen. Außerdem kann allgemein hergeleitet werden, daß eine Verkürzung oder Verlängerung der Eintrittsschnittweite um einen Betrag $\Delta L$ in guter Näherung alle Austrittsschnittweiten um denselben Betrag ändert, allerdings mit umgekehrtem Vorzeichen.

Da die Materialien, aus denen ein Spektrometer üblicherweise aufgebaut wird, i.d.R. nicht vernachlässigbare Wärmeausdehnungskoeffizienten besitzen, haben Temperaturschwankungen Einfluß auf die Messung. Die Längenausdehnung eines gegebenen Materials bei einer Temperaturdifferenz $\Delta T$ wird durch den entsprechenden Längenausdehnungskoeffizienten $\alpha$ bestimmt:

$$l_2 = l_1(1 + \alpha \Delta T) \qquad (3)$$

wobei:

$\Delta T$      Temperaturdifferenz;

$l_1$      Ausgangslänge;

$l_2$      Endlänge;

$\alpha$      Längenausdehnungskoeffizient.

Bei einem Spektrometer hat die Wärmedehnung verschiedene Folgen. Wenn ein Beugungsgitter auf einem Substrat aufgebracht wird, das einen nicht vernachlässigbaren Wärmeausdehnungskoeffizienten $\alpha$ besitzt, ändert sich die Gitterkonstante mit der Temperatur und der Beugungswinkel wird damit temperaturabhängig (vgl. Gittergleichung (1)). Dieser Effekt äußert sich in einer wellenlängenabhängigen Positionsdrift des optischen Systems.

Die Positionsdrift kann bei einer Detektion des (Gesamt-)Spektrums mit ortsauflösenden Sensoren (z.B. CCD- oder CMOS-Detektoren) leicht über ein superpositionierbares Driftreferenzspektrum im Rahmen einer Referenzmessung kompensiert werden. Auch kann über die permanente Beobachtung immer wieder auftretender und für eine Vielzahl von Proben vergleichbarer Spektrenstrukturen oder -ausschnitte eine softwareunterstützte Spektrennachführung realisiert werden. Solche Verfahren sind seit mehreren Jahren Stand der Technik und in einer Vielzahl von Spektrometern verfügbar.

Eine Nachführung der Detektoreinheit tangential zur Fokalkurve ist denkbar und wird für Einzeldetektoren in der DE 10 2004 061 178 A1 beschrieben.

Die EP 1 041 372 A1 schlägt eine Lösung vor, bei welcher die Detektoreinheit eines Spektrometers derart auf einem Trägermaterial mit hohem Wärmeausdehnungskoeffizienten montiert und am Optikgrundkörper befestigt wird, daß die Mitte der Detektoreinheit bei auftretender Wärmeausdehnung der aus der Gitterkonstantenänderung resultierenden, wellenlängenabhängigen Spektrenverschiebung in guter Näherung folgt. Eine Fokuslagenänderung wird in diesem Aufbau jedoch nicht kompensiert bzw. ausgeschlossen, da die zu erfüllende Meßaufgabe keiner exakt gehaltenen Fokuslage bedarf.

Wie in der DE 10 2004 061 178 A1 beschrieben und allgemein bekannt, ist die Fokussierung eines optischen Systems Bestandteil seiner Grundjustage, die nur über die Bewegung der Lichteintrittsöffnung erfolgen kann, wenn die Detektoreinheiten korrekt auf die (momentane) Fokalkurve des Systems positioniert sind. Verändern sich jedoch die Schnittweiten in Abhängigkeit von der Temperatur, weil die Wärmeausdehnungskoeffizienten der verwendeten Materialien nicht vernachlässigt werden dürfen (vgl. Schnittweitengleichung (2), ändert das optische System in Abhängigkeit von der Temperatur seine Fokalkurve (Defokussierung) und büßt damit an spektraler Auflösung ein, da sich bei Temperaturerhöhung alle Abstände im System vergrößern, die Austrittsschnittweite jedoch kleiner werden müßte, wenn die Schnittweitengleichung erfüllt bleiben soll und damit die Fokuslage oder spektrale Auflösung bei wachsender Eintrittsschnittweite erhalten bleiben soll.

Zur Kompensation des soeben beschriebenen Effekts wird in der DE 10 2004 061 178 A1 angeregt, die Lichteintrittsöffnung über Aktuatoren nachzufokussieren und so die Schärfe der Abbildung zu optimieren. Über einen Algorithmus kann dann im Rahmen einer Referenzmessung das Optimum gefunden und nachjustiert werden.

Alternativ können Spektrometer so dimensioniert werden, daß innerhalb eines vorgegebenen Temperaturintervalls nur geringe Änderungen der spektralen Auflösung des Systems aufgrund von Defokussierung durch Wärmeausdehnung auftreten. Bedingung für die bei einer gegebenen Maximaltemperatur zulässige Defokussierung ist dabei der Verbleib innerhalb des Tiefenschärfeintervalls des optischen Systems:

$$t_w = \frac{n\lambda}{A^2} \qquad\qquad (4)$$

wobei:

$t_w$   wellenoptische Tiefenschärfe;
n   Beugungsordnung;
λ   Wellenlänge;
A   Apertur (abhängig von der Gitterausleuchtung und dem Gitterradius).

Durch Auswahl von Materialien mit sehr geringem oder keinem Wärmeausdehnungskoeffizienten α und/oder Konstanthaltung der Betriebstemperatur T des optischen Systems (Thermostatisierung) und/oder aktive Nachführung entweder der Lichteintrittsöffnung oder der Detektoreinheit oder beider Baugruppen mittels Linearmotoren, Piezoaktuatoren und dgl. können die Folgen der Wärmeausdehnung begrenzt bzw. komplett ausgeschlossen werden, wenn man das Gesamtsystem einem weiten Temperaturintervall aussetzen möchte oder muß.

In der Praxis unterliegen Analysengeräte, die mit Spektrometern ausgestattet sind, insbesondere tragbare und mobile Systeme, die ggf. auch noch batteriebetrieben sein sollen, jedoch einigen Restriktionen. So sollen tragbare Systeme möglichst leicht sein und dabei trotzdem über ein ausreichendes und möglichst konstant bleibendes spektrales Auflösungsvermögen verfügen. Wartezeiten bei Wiedereinschalten eines Systems nach längeren Betriebspausen sollten möglichst kurz sein.

Referenzmessungen während des Meßbetriebs werden als störend empfunden und sollen daher auf ein Minimum beschränkt bleiben. Aufwendige mechanische, aktuatorbasierte Nachführsysteme sind jedoch potentiell störanfällig. Zudem sind sie relativ teuer und erhöhen die Baugröße damit ausgestatteter Spektrometer.

Ein weiterer Nachteil bekannter Thermostatisierungen optischer System von Spektrometern ist, daß sie die Betriebsdauer bei Batteriebetrieb eines Spektrometers verkürzen, teilweise sogar ganz erheblich.

Speziallegierungen oder Keramiken mit sehr geringem, praktisch vernachlässigbarem Wärmeausdehnungskoeffizienten sind sehr teuer und zudem meist schwierig zu bearbeiten. Nichtmetallische Werkstoffe sind meist nur als dünnes Plattenmaterial verfügbar, so daß oftmals nicht alle erforderlichen Bearbeitungen problemlos durchgeführt werden können, wie z.B. die Herstellung von Passungen und Gewindebohrungen. Die Herstellung kompakter, räumlicher Strukturen ist mit metallischen Werkstoffen erheblich einfacher, jedoch sind die genannten Speziallegierungen nicht nur teuer, sondern auch sehr schwer und damit für tragbare Systeme ungeeignet.

Weiterer Stand der Technik ist aus US2004239931 und US3503685 bekannt.

OFFENBARUNG DER ERFINDUNG

Der Erfindung liegt die Aufgabe zugrunde, ein Spektrometer mit ausreichender spektraler Auflösung aus einem preisgünstigen, leichten und einfach zu bearbeitenden Werkstoff anzugeben, das ohne Thermostatisierung oder aktive Korrekturen durch beliebige Aktuatoren trotzdem in einem großen Temperaturintervall arbeiten kann.

Die Aufgabe wird von einem Spektrometer mit den Merkmalen des Anspruchs 1 gelöst. Vorteilhafte Ausgestaltungen und Weiterbildungen sind Gegenstand der Unteransprüche

Weitere Einzelheiten und Vorteile der Erfindung ergeben sich aus der nachfolgenden rein beispielhaften und nichtbeschränkenden Beschreibung eines Ausführungsbeispiels in Verbindung mit der Zeichnung.

KURZE BESCHREIBUNG DER ZEICHNUNG

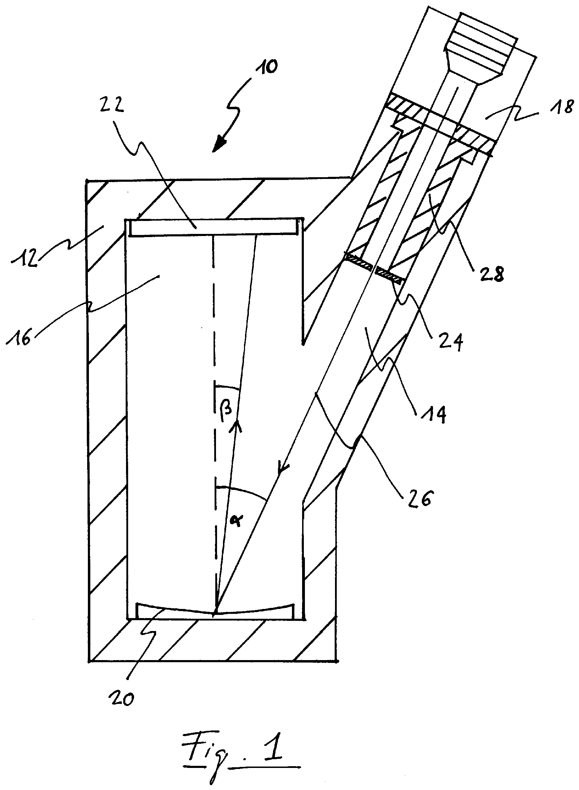

Fig. 1    zeigt einen Schnitt durch eine bevorzugte Ausführungsform eines erfindungsgemäßen Spektrometers.

BESCHREIBUNG BEVORZUGTER AUSFÜHRUNGSFORMEN

Die Fig. 1 zeigt ein Spektrometer 10 mit einem hohlen Optikgrundkörper 12 mit wenigstens einem Lichtkanal 14. Der Lichtkanal 14 ist hierbei als zylindrische Bohrung ausgeführt und mit dem Hohlraum 16 des Optikgrundkörpers 12 verbunden, wobei die Achse des Lichtkanals 14 parallel zur Lichteinfallsachse 26 verläuft.

Der Optikgrundkörper 12 kann auch mehrere Lichtkanäle aufweisen, die dann vorzugsweise so angeordnet werden, daß die dazugehörigen Lichteinfallsachsen nicht den gleichen Lichteinfallswinkel $\alpha$ aufweisen. Damit können der durch die verwendete Detektoreinheit abgedeckte Spektralbereich über sequentielle Messungen des Lichtes aus den verschiedenen Lichteintrittsöffnungen erweitert oder über die Beobachtung und Auswertung eines zusätzlich über eine weitere Lichteintrittsöffnung eingekoppelten Referenzspektrums, z.B. eines Neonspektrums, die Positionsstabilität des Systems gewährleistet werden.

Der Optikgrundkörper 12 ist vorzugsweise einstückig ausgebildet, damit Spannungen, welche bei einer Wärmeausdehnung auftreten, auf ein Minimum reduziert werden können. Die einstückige Fertigung hat auch den Vorteil, daß der Einsatz von Dichtungen und dgl. auf ein Minimum reduziert werden kann, falls ein Vakuum oder eine besondere Edelgas-Atmosphäre im Hohlraum erwünscht ist.

Eine Lichtquelle 18 ist an dem Ende des Lichtkanals 14 angeordnet, das vom Hohlraum 16 entfernt liegt. An dem anderen Ende des Lichtkanals 14 ist ein Beugungsgitter 20 in dem Hohlraum 16 angeordnet. Eine Detektoreinheit 22 befindet sich auf der dem Beugungsgitter 20 gegenüberliegenden Seite des Hohlraums 16. Die Detektoreinheit kann einzeln ausgebildet sein oder aus mehreren, auch unterschiedlichen, Sensoren gebildet sein. Als Sensoren eignen sich besonders Halbleiterdetektoren oder Photoröhren.

Eine Lichteintrittsöffnung 24 ist im Lichtkanal 14 entlang der Lichteinfallsachse 26 zwischen Lichtquelle 18 und Beugungsgitter 20 ebenfalls angeordnet. Lichteintrittsöffnung 24, Beugungsgitter 20 und Detektoreinheit 22 sind so angeordnet, daß die Fokalkurve die Schnittweitengleichung (2) erfüllt.

Die Lichteintrittsöffnung besitzt vorzugsweise eine Spaltbreite zwischen 20 und 5 $\mu$m, und ist vorzugsweise aus einem Material mit einem vernachlässigbaren Wärmeausdehnungskoeffizienten gefertigt, das heißt einem Wärmeausdehnungskoeffizienten, der so gering ist, daß bei den üblichen Einsatzbedingungen des Spektrometers die Wärmeausdehnung der Lichteintrittsöffnung vernachlässigt werden kann. Der Spalt wird vorzugsweise mit Laser oder durch Photoätzen erzeugt.

Das erfindungsgemäße Spektrometer dient zur Intensitätsmessung mit Halbleiterdetektoren oder Photoröhren. Die Fokalkurve des Spektrometers erfüllt die Schnittweitengleichung (2), wobei der Optikgrundkörper aus einem Werkstoff mit Wärmeausdehnungskoeffizient $\alpha$ gefertigt ist.

Bei größerer Temperaturerhöhung kommt es in vielen Werkstoffen zu Wärmedehnungseffekten, die die Fokalkurve über das Tiefenschärfeintervall $t_w$ des optischen Systems hinaus verschieben. Diese sog. Temperaturdefokussierung führt bei herkömmlichen Spektrometern zu einer verringerten spektralen Auflösung und damit zu einem Verlust an optischer Information und somit letztlich zu ungenaueren Meßergebnissen.

Dieses Problem tritt insbesondere dann auf, wenn der Optikgrundkörper aus einer Aluminium- oder Magnesiumlegierung hergestellt ist. Solche Legierungen besitzen zwar ein geringes Gewicht und sind einfach und präzise zu bearbeiten, so daß sich auch komplexe räumliche Strukturen herstellen lassen, jedoch besitzen sie einen relativ großen Wärmeausdehnungskoeffizienten, der schon bei kleinbrennweitigen Systemen wie z.B. einer Flat-Field-Optik schnell zu wahrnehmbaren Wärmeausdehnungseffekten führt. Beispielsweise kann bei Verwendung von Aluminiumlegierungen schon bei 5°C Temperaturanstieg ein merklicher Intensitätsabfall (>10%) im Meßsignal beobachtet werden, obwohl sich die Halbwertsbreiten noch nicht überall auf dem Detektor verändern.

Der Intensitätsabfall ist ausschließlich begründet in der Defokussierung, da die Positionsstabilität jedes optischen Systems vorzugsweise durch eine aktive Driftkompensation über die Beobachtung und Auswertung eines zusätzlich über eine weitere Lichteintrittsöffnung eingekoppelten Driftreferenzspektrums, wie ein Ne-Spektrum, korrigiert werden kann.

Das erfindungsgemäße Spektrometer erlaubt es nun, solche Materialien zur Herstellung des Optikgrundkörpers zu verwenden und trotzdem auf eine Thermostatisierung des optischen Systems zu verzichten, so daß ein kostengünstiges, transportables Spektrometer geschaffen werden kann. Dabei beruht die Erfindung auf der Erkenntnis, daß eine Defokussierung durch Korrektur der Eintrittsschnittweite korrigiert werden kann (vgl. Schnittweitengleichung (2)), was auch Bestandteil des Justagevorgangs ist, bei dem die Lichteintrittsöffnung entlang der Lichteinfallsachse (Verbindungslinie zwischen Lichteintrittsöffnung und Gittermittelpunkt) bewegt wird, bis die Halbwertsbreiten der zu messenden Spektrallinien auf der Fokalkurve einen vorgegebenen Sollwert erreichen.

Erfindungsgemäß wird eine aktive, permanente, temperaturabhängige Korrektur der Eintrittsschnittweite mittels wenigstens eines Kompensationskörpers realisiert. Dazu wird die Lichteintrittsöffnung 24 auf einem Kompensationskörper 28 angeordnet, womit die Wärmeausdehnung des Optikgrundkörpers 12 korrigiert und die Verschiebung der Fokalkurve korrigiert werden kann.

Der Kompensationskörper 28 ist vorzugsweise aus einem Kunststoff von hoher Formstabilität, mit einem hohen Wärmeausdehnungskoeffizienten $\alpha$, der aber einfach zu verarbeiten ist, gefertigt. Dazu eignet sich z.B. Polyoxymethylen (POM). POM ist ein Kunststoff mit einem Wärmeausdehnungskoeffizienten $\alpha$, der etwa 4,5 mal größer als derjenige von Aluminium ist.

Der Kompensationskörper 28 wird vorteilhaft im wesentlichen röhrchenförmig ausgebildet und ist im Lichtkanal 14 so angeordnet, daß die Röhrchenachse des Kompensationskörpers 28 entlang der Lichteinfallsachse 20 verläuft.

Die Lichteintrittsöffnung 24 wird am einen Ende des röhrchenförmigen Kompensationskörpers 28 direkt oder über ein Verbindungsstück befestigt. Das der Lichtseintrittsöffnung 24 gegenüberliegende Ende des röhrchenförmigen Kompensationskörpers 28 wird am Optikgrundkörper 12 befestigt. Dazu kann der Kompensationskörper an einem Ende mit einem auskragenden Rand versehen sein, um ihn z.B. zwischen Lichtquelle 18 und Optikgrundkörper 12 einzuklemmen, so daß sein eines Ende fixiert ist und sich das andere Ende in den Lichtkanal 14 ausdehnen kann.

Durch die erfindungsgemäße Anordnung kommt es bei Wärmeausdehnung des Optikgrundkörpers 12 und bei korrekter Dimensionierung des Kompensationskörpers 28 zu einer Nettobewegung der Lichteintrittsöffnung 24 in Richtung Gittermittelpunkt und somit zu einer Abnahme der Eintrittsschnittweite. Somit wird die Ausdehnung des Kompensationskörpers 28 durch die Ausdehnung des Optikgrundkörpers 12 überkompensiert.

Diese Nettobewegung kann so ausgelegt werden, daß bei Temperaturänderungen die nötige Eintrittsschnittweitenkorrektur durchgeführt wird und so die Fokuslage des Spektrometers auch innerhalb großer Temperaturintervalle konstant gehalten werden kann.

Vorzugsweise bleibt die Fokalkurve bei der durch Wärmeausdehnung oder -kontraktion der Einzelkomponenten des Spektrometers bedingten Veränderung der Eintrittsschnittweite für Temperaturen zwischen 10° C und 55° C auf der Detektoreinheit.

Alternativ kann der Kompensationskörper als Bimetallscheibe ausgebildet sein, welche entsprechend dimensioniert, senkrecht zur Lichteinfallsachse orientiert und konzentrisch aufgebohrt ist. Damit können größere Kompensationswege zurückgelegt werden. Große Kompensationswege sind wegen der Größe des Systems insbesondere bei langbrennweitigen Optiksystemen nötig.

Im Rahmen des Erfindungsgedankens sind zahlreiche Abwandlungen und Weiterbildungen möglich, die sich zum Beispiel auf die Art und Ausgestaltung des Kompensationskörpers und dessen Befestigung beziehen. Beispielsweise kann der Kompensationskörper statt der gezeigten zylindrischen prinzipiell auch andere Grundformen besitzen oder es können mehrere gleiche oder verschiedene Kompensationskörper kombiniert werden.

Die Erfindung wird durch die beigefügten Ansprüche definiert.

BEZUGSZEICHEN

| | |
|---|---|
| 10........... | Spektrometer |
| 12........... | Optikgrundkörper |
| 14........... | Lichtkanal |
| 16........... | Hohlraum des Optikgrundkörpers |
| 18........... | Lichtquelle |
| 20........... | Beugungsgitter |
| 22........... | Detektoreinheit |
| 24........... | Lichteintrittsöffnung |
| 26........... | Lichteinfallsachse |
| 28........... | Kompensationskörper |

**Patentansprüche**

1. Spektrometer (10) mit einem einen Hohlraum (16) ausbildenden Optikgrundkörper (12), der mit wenigstens einem Lichtkanal (14) verbunden ist, wobei eine Lichtquelle (18) an dem Ende des Lichtkanals (14), das vom Hohlraum (16) entfernt liegt, angeordnet ist, einem Beugungsgitter (20) mit einem Gittermittelpunkt, das an dem anderen Ende des Lichtkanals (14) in dem Hohlraum (16) angeordnet ist, einer Lichteintrittsöffnung (24), die im Lichtkanal (14) zwischen der Lichtquelle (18) und dem Beugungsgitter (20) angeordnet ist, und einer Detektoreinheit (22), die auf der dem Beugungsgitter gegenüberliegenden Seite des Hohlraums (16) so angeordnet ist, dass die Fokalkurve des Spektrometers die Schnittweitengleichung (I) erfüllt:

$$\frac{\cos^2 \alpha}{L_A} - \frac{\cos \alpha}{R} + \frac{\cos^2 \beta}{L_B} - \frac{\cos \beta}{R} - n \lambda K = 0 \qquad (I)$$

wobei:

$\alpha$ Einfallswinkel,
$\beta$ Beugungswinkel,
$L_A$ Eintrittsschnittweite,
$L_B$ Austrittsschnittweite,
$R$ Gitterradius (Krümmungsradius der sphärischen Gitterfläche),
$n$ Beugungsordnung (ganzzahlig, positiv oder negativ),
$\lambda$ Wellenlänge (beim Beugungswinkel β),
$K$ spezifische Gitterkonstante, furchenformabhängig,

**dadurch gekennzeichnet,**

- **dass** die Lichteintrittsöffnung (24) auf einem Kompensationskörper (28) angeordnet ist,
- **dass** der Kompensationskörper (28) in dem Lichtkanal (14) angeordnet ist und an dem Optikgrundkörper (12) zwischen Lichtquelle (18) und Beugungsgitter (20) befestigt ist und
- **dass** der Kompensationskörper (28) so ausgestaltet ist, dass bei Wärmeausdehnung des Optikgrundkörpers (12) die temperaturbedingte Ausdehnung des Kompensationskörpers den Abstand zwischen Lichteintrittsöffnung (24) und Gittermittelpunkt verändert, so dass die durch die Wärmeausdehnung des Optikgrundkörpers bedingte Defokussierung durch die Korrektur der Eintrittsschnittweise korrigiert wird.

2.  Spektrometer (10) nach Anspruch 1, **dadurch gekennzeichnet, dass** die Lichteintrittsöffnung (24) an einem Ende des Kompensationskörpers (28) angeordnet ist und das andere Ende des Kompensationskörpers an dem Optikgrundkörper (12) zwischen Lichteintrittsöffnung (24) und Lichtquelle (18) befestigt ist.

3.  Spektrometer (10) nach einem der Ansprüche 1 oder 2, **dadurch gekennzeichnet, dass** der Kompensationskörper (28) im wesentlichen röhrchenförmig ausgebildet ist.

4.  Spektrometer (10) nach einem der Ansprüche 1 oder 2, **dadurch gekennzeichnet, dass** der Kompensationskörper (28) aus Kunststoff, insbesondere aus Polyoxymethylen gefertigt ist.

5.  Spektrometer nach einem der Ansprüche 1 oder 2, **dadurch gekennzeichnet, dass** der Kompensationskörper als konzentrisch aufgebohrte Bimetallscheibe ausgebildet ist.

6.  Spektrometer nach einem der Ansprüche 1 bis 5, **dadurch gekennzeichnet, dass** die Lichtübertragung zu der Lichteintrittsöffnung über einen Lichtleiter erfolgt.

7.  Spektrometer (10) nach einem der Ansprüche 1 bis 6, **dadurch gekennzeichnet, dass** der Optikgrundkörper (12) einstückig ausgebildet ist.

8.  Spektrometer nach einem der Ansprüche 1 bis 7, **dadurch gekennzeichnet, dass** das Spektrometer mehrere Lichtkanäle besitzt.

9.  Spektrometer (10) nach einem der Ansprüche 1 bis 8, **dadurch gekennzeichnet, dass** die Lichteintrittsöffnung (24) aus einem Material mit einem vernachlässigbaren Wärmeausdehnungskoeffizienten gefertigt ist.

10. Spektrometer (10) nach einem der Ansprüche 1 bis 9 **dadurch gekennzeichnet, dass** die Lichteintrittsöffnung auf einem Verbindungsstück angeordnet ist und dieses auf dem Kompensationskörper angeordnet ist.

**Claims**

1. A spectrometer (10) having a main optical body (12) forming a hollow space (16) connected to at least one light channel (14), wherein a light source (18) is disposed at the end of the light channel (14), which is disposed remote from the hollow space (16), a diffraction grating (20) having a grating central point, which is disposed at the other end of the light channel (14) in the hollow space (16), a light inlet opening (24), which is disposed in the light channel (14) between the light source (18) and the diffraction grating (20), and a detector unit (22), which is disposed on the side of the hollow space (16) opposite the diffraction grating, so that the focal curve of the spectrometer satisfies the back focus equation (I):

$$\frac{\cos^2 \alpha}{L_A} - \frac{\cos \alpha}{R} + \frac{\cos^2 \beta}{L_B} - \frac{\cos \beta}{R} - n\lambda K = 0$$

where

$\alpha$ angle of incidence,
$\beta$ diffraction angle,
$L_A$ inlet back focal length,
$L_B$ outlet back focal length,
$R$ grating radius (radius of curvature of the spherical grating surface),
$n$ diffraction order (integer, positive or negative),
$\lambda$ wavelength (at the diffraction angle $\beta$),
$K$ spherical grating constant, depending on line shape,

**characterised in that**

- the light inlet opening (24) is disposed on a compensation body (28),
- the compensation body (28) is disposed in the light channel (14) and fixed on the main optical body (12) between light source (18) and diffraction grating (20),
- the compensation body (28) is configured so that during thermal expansion of the main optical body (12) the thermal-affected expansion of the compensation body changes the distance between light inlet opening (24) and grating central point so that defocussing due to the thermal expansion of the main optical body is corrected by correction of the inlet back focal length.

2. The spectrometer (10) according to claim 1, **characterized in that** the light inlet opening (24) is disposed at one end of the compensation body (28) and that another end of the compensation body is fixed on the main optical body (12) between light inlet opening (24) and light source (18).

3. The spectrometer (10) according to claim 1 or 2, **characterized in that** the compensation body (28) is configured to be substantially tubular.

4. The spectrometer (10) according to claim 1 or 2, **characterized in that** the compensation body (28) is made of plastics, in particular of polyoxymethylene.

5. The spectrometer according to claim 1 or 2, **characterized in that** the compensation body is configured as a concentrically driller bimetal disk.

6. The spectrometer according to one of claims 1 to 5, **characterized in that** light transmission to the light inlet opening takes place via a light guide.

7. The spectrometer (10) according to one of claims 1 to 6, **characterized in that** the main optical body (12) is one piece.

8. The spectrometer according to one of claims 1 to 7, **characterized in that** the spectrometer has a plurality of light channels.

9. The spectrometer (10) according to one of claims 1 to 8, **characterized in that** the light inlet opening (24) is made of a material having a negligible coefficient of thermal expansion.

**10.** The spectrometer (10) according to one of claims 1 to 9, **characterized in that** the light inlet opening is disposed on a connecting piece and the connecting piece is disposed on the compensation body.

**Revendications**

**1.** Spectromètre (10) comprenant un corps de base optique (12) qui forme une cavité (16) et qui est relié à au moins un canal de lumière (14), dans lequel une source de lumière (18) est disposée à l'extrémité du canal de lumière (14) qui est éloignée de ladite cavité (16), un réseau de diffraction (20) ayant un point central de réseau, qui est disposé à l'autre extrémité du canal de lumière (14) à l'intérieur de la cavité (16), une ouverture d'entrée de lumière (24) qui est disposée dans le canal de lumière (14) entre la source de lumière (18) et le réseau de diffraction (20), ainsi qu'une unité de détection (22) qui est disposée sur le côté de la cavité (16) qui est opposé au réseau de diffraction, de telle sorte que la courbe focale du spectromètre vérifie l'équation de focale frontale (I):

$$\frac{\cos^2\alpha}{L_A} - \frac{\cos\alpha}{R} + \frac{\cos^2\beta}{L_B} - \frac{\cos\beta}{R} - n\,\lambda\,K = 0 \qquad (I)$$

dans laquelle:

$\alpha$ angle d'incidence,
$\beta$ angle de diffraction,
$L_A$ focale frontale d'entrée,
$L_B$ focale frontale de sortie,
R rayon de réseau (rayon de courbure de la surface sphérique de réseau),
n ordre de diffraction (en nombre entier, positif ou négatif)
$\lambda$ longueur d'onde (dans l'angle de diffraction $\beta$),
K constante de réseau spécifique, en fonction de la forme des sillons,

**caractérisé en ce**

- **que** l'ouverture d'entrée de lumière (24) est disposée sur un corps de compensation (28),
- **que** ledit corps de compensation (28) est disposé dans le canal de lumière (14) et est fixé sur le corps de base optique (12) entre la source de lumière (18) et le réseau de diffraction (20), et
- **que** le corps de compensation (28) est configuré de telle sorte que, en cas de dilatation thermique du corps de base optique (12), la dilatation du corps de compensation, qui est due à la température, modifie la distance entre l'ouverture d'entrée de lumière (24) et le point central de réseau de sorte que la défocalisation due à la dilatation thermique du corps de base optique est corrigée par la correction de la focale frontale d'entrée.

**2.** Spectromètre (10) selon la revendication 1, **caractérisé en ce que** l'ouverture d'entrée de lumière (24) est disposée à une extrémité du corps de compensation (28) et que l'autre extrémité du corps de compensation est fixée sur le corps de base optique (12) entre l'ouverture d'entrée de lumière (24) et la source de lumière (18).

**3.** Spectromètre (10) selon l'une quelconque des revendications 1 ou 2, **caractérisé en ce que** le corps de compensation (28) est réalisé de manière pour l'essentiel tubulaire.

**4.** Spectromètre (10) selon l'une quelconque des revendications 1 ou 2, **caractérisé en ce que** le corps de compensation (28) est réalisé en matière plastique, en particulier en polyoxyméthylène.

**5.** Spectromètre selon l'une quelconque des revendications 1 ou 2, **caractérisé en ce que** le corps de compensation est réalisé en tant que disque bimétallique percé de manière concentrique.

**6.** Spectromètre selon l'une quelconque des revendications 1 à 5, **caractérisé en ce que** la transmission de lumière vers l'ouverture d'entrée de lumière se fait par un guide de lumière.

**7.** Spectromètre (10) selon l'une quelconque des revendications 1 à 6, **caractérisé en ce que** le corps de base optique (12) est réalisé en une seule pièce.

**8.** Spectromètre selon l'une quelconque des revendications 1 à 7, **caractérisé en ce que** le spectromètre présente une pluralité de canaux de lumière.

**9.** Spectromètre (10) selon l'une quelconque des revendications 1 à 8, **caractérisé en ce que** l'ouverture d'entrée de lumière (24) est réalisée dans un matériau ayant un coefficient de dilatation thermique négligeable.

**10.** Spectromètre (10) selon l'une quelconque des revendications 1 à 9, **caractérisé en ce que** l'ouverture d'entrée de lumière est disposée sur une pièce de jonction et que celle-ci est disposée sur le corps de compensation.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004061178 A1
- EP 1041372 A1
- US 2004239931 A
- US 3503685 A